Europäisches Patentamt

European Patent Office

Office européen des brevets

(11) Publication number: 0 246 803
A2

## (12) EUROPEAN PATENT APPLICATION

(21) Application number: 87304230.3

(22) Date of filing: 13.05.87

(51) Int. Cl.4: B62M 9/08

(30) Priority: 16.05.86 CS 3564/86

(43) Date of publication of application:
25.11.87 Bulletin 87/48

(84) Designated Contracting States:
AT DE FR GB IT NL

(71) Applicant: KOVODRUZSTVO Mladá Boleslav
vyrobni druzstvo
No. 123 Marxova, Mlada
Boleslav(CS)

(72) Inventor: Kovar, Josef
No. 4 Karlova
Praha 1(CS)
Inventor: Novotny, Karel
No. 1330 Za mlynem
Praha 4(CS)
Inventor: Wallenfels, Pavel
No. 1631 Markusova
Praha 4(CS)
Inventor: Snizek, Jiri
No. 1836 Kotovova
Praha 5(CS)
Inventor: Sida, Rudolf
No. 38 Fucikova
Cheb(CS)
Inventor: Pavlata, Petr
No. 16 Svobodova
Praha 8(CS)

(74) Representative: Wotherspoon, Graham et al
FITZPATRICKS 4 West Regent Street
Glasgow G2 1RS Scotland(GB)

(54) Variable transmission gear.

(57) A variable transmission gear especially but not exclusively for bicycles comprises a transmission element (12) such as a chain or a belt which is in engagement with a driving and/or a driven rosette (1), the rosette (1) consisting of two parts (4) adapted to be mutually shifted by means of straight guides (3) for change of the transmission ratio, the axes of said guides (3) being parallel and passing beyond or outwith the axis of a supporting shaft (5) of the rosette.

FIG.1

## Variable transmission gear

The present invention relates to a variable transmission gear especially but not exclusively for use with bicycles, said transmission gear including a transmission element such as a chain or belt, which transmission element is in engagement with a rotary driving and/or a driven member consisting of a plurality of plates (such a member is hereinafter and in the claims referred to as a rosette), the rosette being connected with a carrier from which or to which torque is transmitted, said rosette being formed by segments guided slidably with respect to the carrier.

In known forms of variable transmission gears the rosette consists of a number of parts which for a change of the transmission ratio are radially shifted with respect to or from the centre of the rosette. Radial guide means require to be provided for the shifting of individual parts of the rosette and also additional means are used, usually in the form of a spindle mechanism or an additional plate with a spiral groove, into which individual parts of the rosette are fitted. These arrangements have the drawback of requiring a relatively large number of components for the transmission gear, whereby they are relatively expensive both in construction and in manufacture.

Another drawback of these known variable transmission gears is the limit of transmission ratio change possible due to the limit of the guiding length of the segments by a central supporting bolt.

It is thus impossible to obtain with these known variable transmission gears the advantages of oval rosettes where in the course of a single revolution of the supporting shaft the length of the power arm on the rosette is cyclically changing, so that it is possible to synchronize the maximum power generated by the cyclist with the maximum transmission ratio in the course of one revolution of the shaft as is the case in systems known by the name of "biopace".

In other know constructions of variable transmission gears the individual segments of the rosette are arranged rotatably on a carrier. The rotational arrangement of segments is more demanding with regard to accurate guiding of the segments and a reduction in stiffness inevitably results thereby. Another drawback of the rotational arrangements of the variable transmission gear is due to the fact that with this construction a constant prior required adjustment of the crank with respect to a chosen point on the rosette within the whole range of gear shifting is not achieved.

It is an object of the present invention to provide a variable transmission gear of relatively simple design with a small number of component parts and wherein the advantages of oval rosettes can be obtained, and such that at any change of the transmission ratio the adjustment of the position of the crank with respect to the chosen position of the rosette will remain constant.

In accordance with the present invention this object is met by the segments of the rosette being kinematically interconnected with the carrier by substantially straight guides each of which has an axis which extends beyond or outwith the axis of the supporting shaft, the axes of the guide being arranged mutually parallel. Preferably the segments are provided at their mutually facing parts with parting surfaces, which are at least partly parallel with the axes of the guides and are in sliding contact either mutually or with a straight sliding surface formed on the supporting shaft. A sliding couple formed by a guiding element and a guiding slot can be arranged between the segments and the carrier and a control couple formed by a control pin and a control slot can be arranged between the segment and the control plate.

An advantage of the variable transmission gear according to the present invention is its simplicity of construction and the possibility of utilising the "biopace" system while maintaining a constant adjustment of the crank with respect to the chosen position of the half axle of the rosette. Another advantage is the possibility of a wide range of variations of the transmission ratio due to the arrangement of guidings of segments beyond the axis of the supporting shaft and the possibility of an increase of the stiffness of segments which are in mutual engagement or in engagement with the supporting shaft.

Embodiments of the present invention will now be described, by way of example, with reference to the accompanying drawings wherein:-

Fig. 1 is an elevation of one embodiment of a variable transmission gear of the present invention;

Fig. 2 is an elevation of the gear of Fig. 1 in the position of a maximum transmission ratio;

Fig. 3 is a sectional view thereof, the section taken along planes indicated in Fig. 2 by the staggered line A-A,

Fig. 4 is an elevation of parts of control means for gear shifting;

Figs. 5 and 6 are elevations of an alternative embodiment of the variable transmission gear at minimum and maximum transmission ratios;

Figs. 7 and 9 are elevations of another alternative embodiment of the variable transmission gear at minimum and maximum transmission ratios; and

Fig. 8 is a sectional view of this alternative embodiment, the section taken along planes indicated in Fig. 7 by the staggered line A-A.

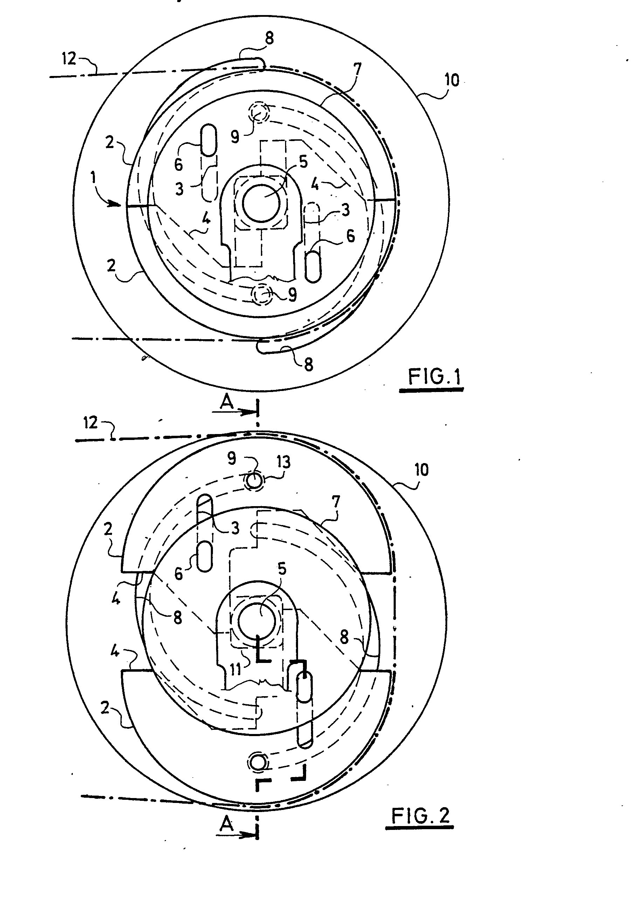

With reference to Figs. 1, 2 and 3 a variable transmission gear comprises a rosette 1 which is shown in engagement with a chain 12 and which is formed by two segments 2 arranged between a carrier 7 and a control plate 10. The carrier 7 is supported on a rotatable supporting shaft 5 so as to be non-rotatable relative to the shaft 5, whereas the control plate 10 is mounted rotatably on a sleeve of the carrier 7. The segments 2 are provided on mutually facing parts with free parting surfaces 4 which are partly in contact with a guiding prism 11 which is formed by a part of the sleeve of the carrier 7. Guide slots 3 are provided in the segments 2, with guiding elements 6 firmly connected with the carrier 7 in slidable engagement with said guide slots 3. Control pins 9 are fixed on the segments 2 and engage the side walls of respective control grooves 8 of the control plate 10. For the provision of a minimum transmission ratio the parting surfaces 4 of the segments 2 bear against each other. When the segments 2 are moved apart from each other up to the maximum spaced distance (Fig. 2) parts of their surfaces which are parallel with the slots 3 are in contact with the supporting shaft 5 or with the guiding prism 11 as can be seen in Fig. 2. The guide slots 3 of segments 2 are parallel and their axes are located to the sides of or beyond the axis of the supporting shaft 5.

The axial distance between the rosette 1, the carrier 7 and the control plate 10 is achieved by distance plates 14 and by safety washers 13 arranged on control pins 9.

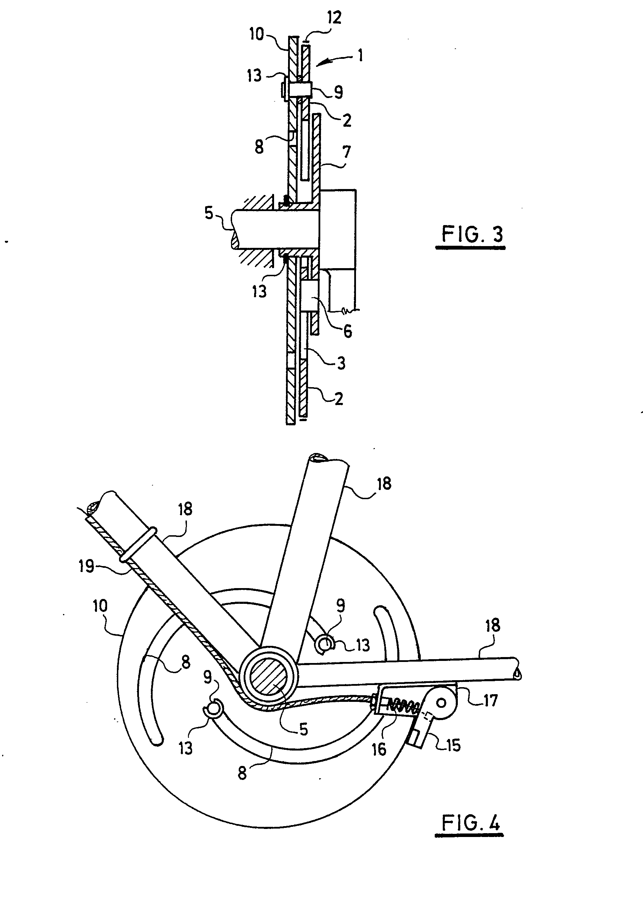

Fig. 4 show the above variable gear serving as the crank wheel in a bicycle and a control device is provided for the gear formed by a control lever 15 at the rim of control plate 10 pivotably supported on a holder 17 fixed to the frame 18 of the bicycle. The control lever 15 is connected to a Bowden cable 19 and is maintained in its initial position free of plate 10 by a return spring 16.

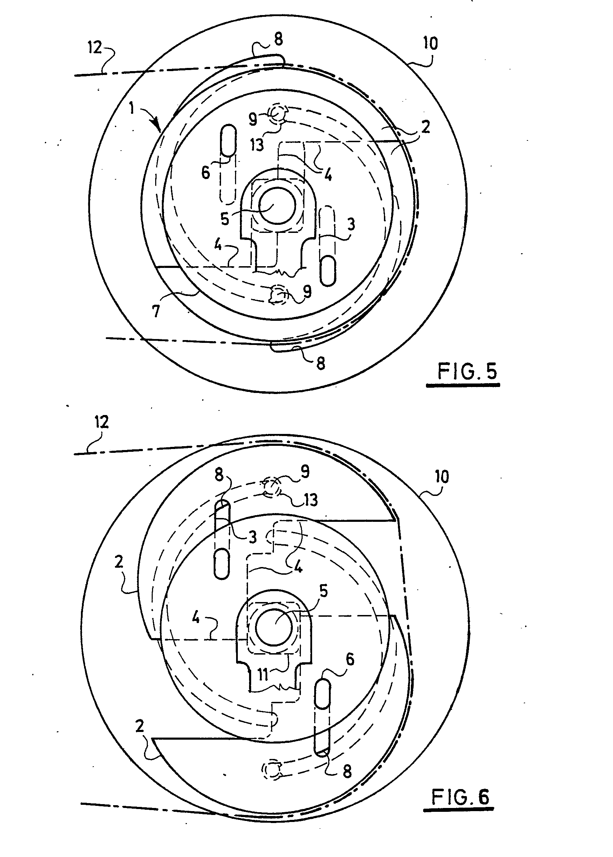

In the alternative embodiment shown in Figs. 5 and 6 the parting surfaces 4 of segments 2 are arranged differently.

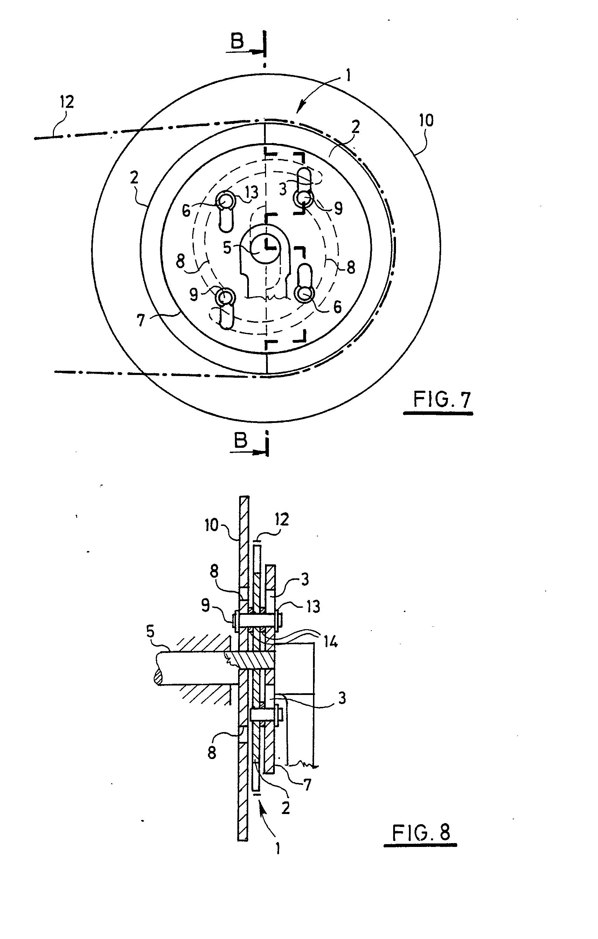

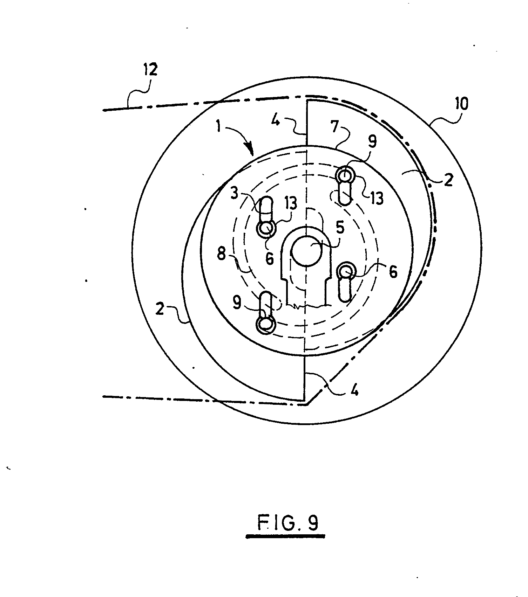

In the further alternative embodiment shown in Figs. 7, 8 and 9 almost the whole parting surface 4 of each segment 2 is parallel to the guide slot 3 and this embodiment has the difference relative to the previous described embodiments that in the case of a change of the transmission ratio, the distance of the outermost corner portions on the circumference of the segments is changed (see Fig. 9) whereas in the earlier mentioned constructions the distance apart curved outer circumferential portions, of the segments 2 was changed. The control plate 10 and the rosette 1 are rotatably supported directly on the supporting shaft 5. The control pins 9 of this embodiment also engage in the guide slots 3 of the carrier 7 and contribute to the guiding of the segments 2. The parting surfaces 4 of both segments 2 are in mutual sliding contact. In all the mentioned embodiments it is possible to provide the reciprocal arrangement with the control grooves in the segments of the rosette and the control pins in the control plate.

When the supporting shaft 5 rotates, the carrier 7 takes along the rosette 1 by way of the guiding elements 6 and the slots 3 and furthermore also takes along the control plate 10 by way of the control pins 9 and the control grooves 8. When the ratio of the transmission is to be changed (increased), the control lever 15 is pressed against the circumference of the control plate 10 by pulling the Bowden cable 19, so causing the control plate 10 to be braked and the rosette 1 is turned relative to the control plate 10. Due to this relative turning movement the control pin 9 is shifted in the control groove 8 from a position relatively close to the axis of the supporting shaft 5 to a position more distant from this axis. The segments 2 are thus moved to a more spaced apart position, the segments 2 being guided in this movement by means of the slots 3 and the guiding element 6 and by portions of the parting surfaces 4 which are in contact either with the guiding prism 11 or with the supporting shaft 5. The increase of the transmission ratio is completed by release of the control lever 15, possibly by contact of the control pin 9 with an extreme end of the control groove 8. A different transmission ratio from a minimum to a maximum can thus be achieved by different braking of the control plate 10.

Where the transmission ratio has to be reduced, the control plate 10 is again braked by pulling the Bowden cable 19, thereby pressing the control lever 15 against the control plate 10. The supporting shaft 5 has to be turned against its original direction of rotation, so that the control pin 9 is shifted in the control groove 8 so that it is brought to a position more close to the axis of the supporting shaft 5. The control pins 9 thereby take along the segments 2 toward a position corresponding to the minimum transmission ratio.

**Claims**

1. A variable transmission gear particularly but not exclusively for bicycles, comprising a transmission element such as a chain or a belt, which transmission element is in engagement with a driving and/or driven rosette, said rosette being arranged on a supporting shaft connected with a carrier adapted to transmit the torque, the rosette comprising two segments movably guided with respect to the carrier, characterised in that the two segments (2) of the rosette (1) are kinematically interconnected with the carrier (7) by substantially straight guides, each of which has an axis which extends beyond or outwith the axis of the supporting shaft (5), the axes of said guides (3) being arranged mutually parallel.

2. A variable transmission gear as claimed in claim 1, characterised in that the segments (2) are provided on mutually facing parts with parting surfaces (4), with at least parts of said parting surfaces (4) being parallel with the axes of guides (3).

3. A variable transmission gear as claimed in claim 2, characterised in that a part of the parting surface (4) of one segment (2) is in contact with a part of the parting surface (4) of the other segment (2) for at least one relative position of the segments (2).

4. A variable transmission gear as claimed in claim 2, characterised in that a part of the parting surface (4) of a segment (2) is in contact with a sliding surface arranged on or associated with the supporting shaft (5).

5. A variable transmission gear as claimed in claim 1, characterised in that a guide element (6) is in engagement with the guide (3) and forms with the guide (3) a sliding couple between the segment (2) and the carrier (7).

6. A variable transmission gear as claimed in any one of the preceding claims, characterised in that a control couple is provided between the segments (2) and a control plate (10); said control couple comprising a control slot (8) on one of the control plates (10) and a respective segment (2), and a control pin (9) located in said control slot (8) and carried by the other of the control plate (10) and the segment (2).

7. A variable transmission gear as claimed in claim 6, when dependent on claim 5, characterised in that one of said control pins (9) comprises a guide element located additionally on one of said guides (3).

FIG.1

FIG.2

FIG. 3

FIG. 4

FIG. 5

FIG. 6

FIG. 7

FIG. 8

FIG. 9